# EUROPÄISCHE PATENTSCHRIFT

(11) **EP 1 204 844 B1**
(45) Veröffentlichungstag und Bekanntmachung des Hinweises auf die Patenterteilung: **06.10.2004**
(21) Anmeldenummer: 00958134.9
(22) Anmeldetag: 14.07.2000
(51) Int. Cl.: G01B 11/00

(54) **VORRICHTUNG ZUM BESTIMMEN DER RAD- UND/ODER ACHSGEOMETRIE VON KRAFTFAHRZEUGEN**
DEVICE FOR DETERMINING WHEEL AND/OR AXLE GEOMETRY IN MOTOR VEHICLES
INSTALLATION PERMETTANT DE DETERMINER LA GEOMETRIE D'UNE ROUE ET/OU D'UN ESSIEU DE VEHICULES AUTOMOBILES

(30) Priorität: 24.07.1999 DE 19934864
(43) Veröffentlichungstag der Anmeldung: 15.05.2002
(73) Patentinhaber: ROBERT BOSCH GMBH, 70442 Stuttgart (DE)
(72) Erfinder: ADOLPH, Dietrich, D-73095 Albershausen (DE)
(86) Internationale Anmeldenummer: PCT/DE2000/002312
(87) Internationale Veröffentlichungsnummer: WO 2001/007862

(56) Entgegenhaltungen:
- DE-A- 19 757 760
- US-A- 5 809 658

## Beschreibung

### Stand der Technik

Die Erfindung bezieht sich auf eine Vorrichtung zum Bestimmen der Radund/oder Achsgeometrie von Kraftfahrzeugen in einem Meßraum mittels einer optischen Meßeinrichtung mit mindestens zwei Bildaufnahmeeinrichtungen, die aus zumindest zwei unterschiedlichen Perspektiven eine Markierungseinrichtung einschließlich mehrerer an einem Rad angeordneten Radmerkmale, mindestens eines Karosseriemerkmals und einer Bezugsmerkmalsanordnung mit mindestens drei zumindest in einer Ebene versetzten Bezugsmerkmalen erfaßt, und mit einer Auswerteeinrichtung, wobei die Lage der Bezugsmerkmale in dem Meßraum in der Auswerteeinrichtung bekannt ist, die Erfassung der Markierungseinrichtung während der Vorbeifahrt des Kraftfahrzeuges erfolgt und die Drehachse eines vermessenen Rades durch gleichzeitiges Erfassen der Radmerkmale und des mindestens einen Karosseriemerkmals zu mehreren Zeitpunkten in dem Meßraum ermittelt wird.

Eine derartige Vorrichtung ist in der DE 197 57 760 A1 angegeben. Mit Hilfe mehrerer Kameras, einer Bezugsmerkmalsanordnung und Merkmalen bzw. Marken an den Fahrzeugrädern und der Karosserie kann die Lage der Radachsen in einem Meßraum bestimmt werden. Die Anordnung der Bezugsmerkmale ist in der Auswerteeinrichtung bekannt. Die Auswertung macht von bekannten Verfahren der Triangulation Gebrauch. Dieses bekannte Prüfverfahren sieht vor, dass die Räder an der Meßeinrichtung vorbei fahren. Der Sturz der Radachsen bezieht sich auf die Vertikale und kann, soferndiese ausgezeichnete Richtung in einem Bezugs-Koordinatensystem bekannt ist, für jedes Rad angegeben werden.

Anders verhält es sich mit der Einzelspur der Räder. Die Bezugsrichtung liegt hier in einer Ebene senkrecht zur Vertikalen, üblicherweise also parallel zum Prüfplatzboden. Die ausgezeichnete Richtung ist hier die Fahrachse, die als Winkelhalbierende der Einzelspuren der ungelenkten Räder definiert ist.

Bisher war es zur Bestimmung der Einzelspuren der gelenkten Vorderräder demnach üblich, zuerst die Fahrachse zu ermitteln, indem die Einzelspuren der Hinterräder gemessen wurden. Erst danach wurden die Vorderräder vermessen.

Der Erfindung liegt die Aufgabe zugrunde, eine Vorrichtung der eingangs angegebenen Art bereit zu stellen, die mit vereinfachtem Aufbau eine einfachere Bestimmung der Rad- und/oder. Achsgeometrie von Kraftfahrzeugen ergibt.

Diese Aufgabe wird mit den Merkmalen des Anspruches 1 gelöst. Hiernach ist vorgesehen, dass die Vertikalenrichtung im Meßraum aus der Lage der Bezugsmerkmale im Meßraum bestimmt wird, dass die Richtung der Fahrachse des Kraftfahrzeugs in der Auswerteeinrichtung auf der Grundlage der Erfassung der Markierungseinrichtung gesondert für jedes Rad aus einer Bewegungsbahn des mindestens einen Karosseriemerkmals ermittelt wird und dass die Lage der Drehachse des Rades bezüglich der Vertikalen und der Richtung der Fahrachse bestimmt wird.

Mit diesen Maßnahmen werden bereits mit einer an einem Rad vorgesehenen Meßeinrichtung während der Vorbeifahrt die Vertikalenrichtung und die Richtung der Fahrachse ermittelt, aus denen dann ohne Messungen an weiteren Rädern die Daten zur Rad- und/oder Achsgeometrie des betreffenden Rades erhalten werden. Mit der ermittelten Lage der Drehachse des Rades können z.B. der Sturz als Winkel zur Vertikalen und die Einzelspur des betreffenden Rades als Winkel zur Fahrachsrichtung leicht bestimmt werden, ohne dass die Fahrachse als Winkelhalbierende der ungelenkten Räder ermittelt zu werden braucht.

Die Radachse läßt sich dadurch genau bestimmen, dass die Drehachse des Rades während der Vorbeifahrt durch Erfassen der einzelnen Drehbahnen mehrerer Radmerkmale erfolgt, wobei die Translationsbewegung des Kraftfahrzeuges, die aus der Bewegungsbahn des mindestens einen Karosseriemerkmals bestimmt wird, eliminiert wird. Dadurch kann rechnerisch eine Felgenschlagkompensation vorgenommen bzw. der Einfluss ähnlicher Störgrößen kompensiert werden. Auch die exakte Drehebene des Rades ist dadurch bekannt.

Der einfache Aufbau wird weiterhin dadurch begünstigt, dass zum Ermitteln der Vertikalenrichtung die Bezugsmerkmalsanordnung in eine Ruhelage eingependelt aufgehängt ist. Liegen mehrere Bezugsmerkmale der Bezugsmerkmalsanordnung senkrecht übereinander, so kann die Vertikalenrichtung besonders einfach festgestellt werden.

Lageänderungen des Fahrzeugs bezüglich der Bezugsmerkmalsanordnung, die z.B. bei Lenkeinschlägen zur Vermessung und Einstellung der Achsgeometrie an den gelenkten Rädern oder zum Ermitteln der Lage der Lenkerachse auftreten, werden dadurch unkritisch, dass die Richtung der Fahrachse und/oder die Vertikalenrichtung auf ein karosserietypisches Koordinatensystem bezogen wird, wobei zur Parameter-Transformation mehrere Karosseriemerkmale verwendet werden. Mit der Kenntnis des karosserietypischen Koordinatensystems wirkt sich eine Lageänderung des Fahrzeugs bezüglich der Bezugsmerkmalsanordnung nicht aus. Eine weitere vorteilhafte Ausbildung besteht dabei darin, dass ein Prüfplatz zur Vermessung eines gelenkten Rades vorgesehen ist, auf dem die Vermessung auf der Basis des karosserietypischen Koordinatensystems vorgenommen wird.

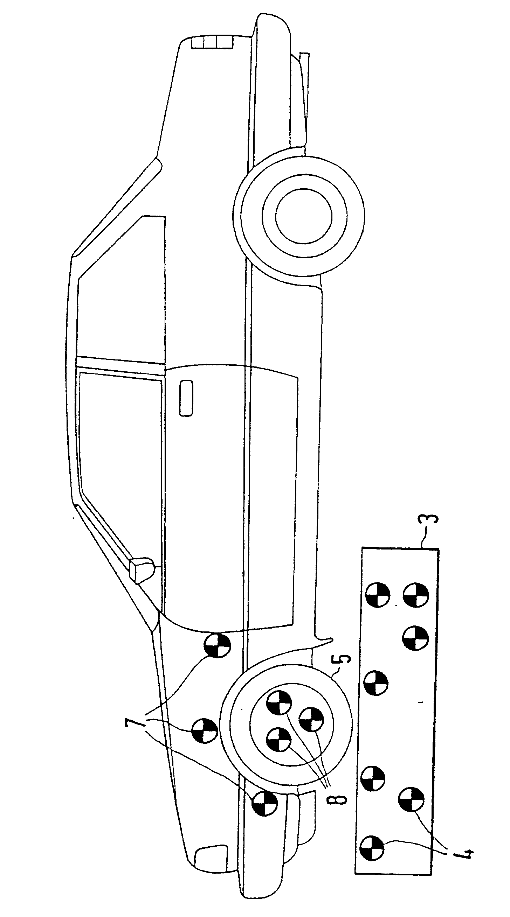

Die Erfindung wird nachfolgend anhand eines Ausführungsbeispiels unter Bezugnahme auf die Zeichnung näher erläutert.

Die Fig. zeigt ein Kraftfahrzeug mit mehreren in dessen vorderem Karosseriebereich in der Zeichenebene versetzten, in der Nähe eines Vorderrades 5 angeordneten Karosseriemerkmalen 7, mehreren, ebenfalls in der Zeichenebene versetzten und an dem Rad 5 angeordneten Radmerkmalen 8 sowie eine von dem Fahrzeug beabstandete Bezugsmerkmalsanordnung 3 mit mehreren, ebenfalls in der Zeichenebene versetzten Bezugsmerkmalen 4. Dabei können die Bezugsmerkmale 4, die Radmerkmale 8 und die Karosseriemerkmale 7 zusätzlich zueinander räumlich versetzt sein. Die Bezugsmerkmale 4, die Radmerkmale 8 sowie die Karosseriemerkmale 7 werden gleichzeitig mit einer entsprechend angeordneten (nicht gezeigten) optoelektronischen Meßvorrichtung mit mindestens zwei Bildaufnahmeeinrichtungen, wie z.B. Kameras, aus zumindest zwei unterschiedlichen Perspektiven und in mehreren Zeitpunkten während einer Vorbeifahrt des Kraftfahrzeugs gemeinsam erfaßt.

Um die z.B. für die Bestimmung des Sturzes des betreffenden Rades wesentliche Vertikalenrichtung festzustellen, wird ein Probekörper vermessen, der als Pendel frei beweglich aufgehängt ist (Kalibrierpendel). Dieser Probekörper kann z.B. die als Pendel aufgehängte Bezugsmerkmalsanordnung 3 sein. Aus der Ruhelage des Pendels im Raum ist die gesuchte Vertikalenrichtung leicht bestimmbar. Auf dem Pendel sind z.B. entlang einer geraden Symmetrieachse Pendelmarken befestigt, so dass bereits unmittelbar aus der Lage der Pendelmarken die Vertikale erkannt werden kann. Bei anderer Anordnung der Pendelmarken ist die Vertikale mit einer mit der optoelektronischen Meßvorrichtung in Verbindung stehenden Auswerteeinrichtung leicht zu ermitteln. Zweckmäßigerweise werden alle Koordinaten der Bezugsmerkmalsanordnung 4 von nun an so transformiert, dass ein orthogonales Koordinatensystem entsteht, mit der Vertikalen als einer der drei Hauptachsen. Die verbleibenden zwei Achsen beschreiben dann eine Ebene, in der Spurwinkel definiert sind. Es wird vorausgesetzt, dass diese Ebene parallel zum Prüfplatzboden ist.

Bei der Vorbeifahrt des Kraftfahrzeuges an der Meßeinrichtung bewegen sich alle Punkte der Fahrzeugkarosserie, also insbesondere auch die Karosseriemerkmale 7, auf einer Bewegungsbahn, die parallel zur Fahrachse ist, da ja Lenkeinschläge bei der Vorbeifahrt nicht erlaubt sind und derartige Fahrzeugbewegungen gegebenenfalls erkannt und die Messungen eliminiert werden. Während die Radmerkmale 8 sich während der Vorbeifahrt auf Zykloiden bewegen, sind die Spuren der Karosseriemerkmale 7 im Meßraum lauter parallele Geraden. Auf den Prüfplatzboden projiziert, liefern sie die Richtung der Fahrachse. Damit steht unmittelbar eine Bezugsrichtung zur Ermittlung der Rad-Einzelspur zur Verfügung. Wird das Verfahren auf die ungelenkten Hinterräder angewandt, ergibt sich eine einfache Möglichkeit zur Überprüfung der Vorgehensweise. Für diesen Schritt der Bestimmung der Fahrachsenrichtung reicht im Prinzip ein einziges Karosseriemerkmal 7 in der Nähe des betreffenden Rades 5.

Mit mehreren Radmerkmalen 8 kann während der Vorbeifahrt mit der Meßeinrichtung und Auswerteeinrichtung die Lage der Drehachse des Rades 5 genau bestimmt werden, wobei die Zykloide jedes Radmerkmals 8 ausgewertet und die Umlaufbahn jedes Radmerkmals 8 von der durch das Erfassen der Karosseriemerkmale 7 bekannten Linearbewegung befreit wird, so dass nur die Umlaufbewegung der Radmerkmale 8 übrig bleibt. Dadurch wird die exakte Drehebene des Rades 5 bzw. die genaue Lage der Drehachse des Rades 5 erhalten.

Während der vollständigen Vermessung eines gelenkten Rades 5 und auch beim Ermitteln der Lage der Lenkerachse werden an ihm Lenkeinschläge vorgenommen. Dazu fährt das Rad 5 auf eine Stelle auf dem Prüfplatz, an dem diese Lenkeinschläge mit möglichst wenig Reibungsverlusten durchgeführt werden können, z.B. auf eine kugelgelagerte Drehplatte oder eine mit Schmier- bzw. Gleitmittel behandelte Stelle. Auch durch Anheben der Karosserie soweit, dass die Räder 5 relativ kräftefrei eingeschlagen werden können, sind Reibungsverluste weitgehend vermeidbar. Für die Achsvermessung ist in diesem Zusammenhang wichtig, dass außer der Vertikalenrichtung auch die Richtung der Fahrachse bekannt ist. Bei der jetzt vorgenommenen Vermessung bewegt sich das Fahrzeug nicht mehr. Daher wird die Richtung der Fahrachse bereits bei der Fahrt auf die bezeichnete Stelle in der vorstehend angegebenen Weise ermittelt. Dann ist die Richtung der Fahrachse zwar bezüglich des Prüfplatzes bekannt, kann aber während der Lenkeinschläge nicht unmittelbar benutzt werden, da mit den Lenkeinschlägen, zum Teil erhebliche, Querbewegungen des Fahrzeuges verbunden sind. Die Lösung des Problems liegt nun darin, dass vor Durchführung der Lenkeinschläge die zuvor bestimmte Fahrachse auf ein karosserietypisches Koordinatensystem bezogen wird. Für die erforderliche Parameter-Transformation werden die genannten Karosseriemerkmale 7 verwendet. Für die Bestimmung der Fahrachsrichtung reichen bereits ein oder zwei Karosseriemerkmale 7, wobei es günstig ist, dass diese in Fahrzeug-Längsrichtung einigermaßen entfernt voneinander sind. Eine genauere Beschreibung ist natürlich dann möglich, wenn mehr als zwei Karosseriemerkmale 7 einbezogen werden. Während des Lenkeinschlages können nun sämtliche Bewegungen in der Horizontalen auf die ermittelte Richtung der Fahrachse in dem karosserietypischen Koordinatensystem bezogen werden.

Mit nur einer Meßeinrichtung für nur ein Rad 5 läßt sich demnach mit den angegebenen Maßnahmen eine Vollvermessung eines gelenkten Rades 5 hinsichtlich der Messung -der üblichen Rad- und Achsgeometrien durchführen. Neben der Richtung der Fahrachse läßt sich auch die vertikale Richtung entsprechend in das karosseriespezifische Koordinatensystem transformieren, wodurch für weitere Einstellungen das Bezugs-Koordinatensystem nicht mehr erforderlich ist und entsprechende Einstellarbeiten z.B. auf einer Hebebühne vorgenommen werden können.

## Patentansprüche

1. Vorrichtung zum Bestimmen der Rad- und/oder Achsgeometrie von Kraftfahrzeugen in einem Meßraum, mit einer optischen Meßeinrichtung mit mindestens zwei Bildaufnahmeeinrichtungen, die aus zumindest zwei unterschiedlichen Perspektiven eine Markierungseinrichtung einschließlich mehrerer an einem Rad (5) angeordneten Radmerkmale (8), mindestens eines Karosseriemerkmals (7) und einer Bezugsmerkmalsanordnung (3) mit mindestens drei zumindest in einer Ebene versetzten Bezugsmerkmalen (4) erfaßt, und mit einer Auswerteeinrichtung, wobei die Lage der Bezugsmerkmale (4) in dem Meßraum in der Auswerteeinrichtung bekannt ist, die Erfassung der Markierungseinrichtung während der Vorbeifahrt des Kraftfahrzeuges erfolgt und die Drehachse eines vermessenen Rades (5) durch gleichzeitiges Erfassen der Radmerkmale (8) und des mindestens einen Karosseriemerkmals (7) zu mehreren Zeitpunkten in dem Meßraum ermittelt wird,
**dadurch gekennzeichnet,**
**dass** die Vertikalenrichtung im Meßraum aus der Lage der Bezugsmerkmale (4) im Meßraum bestimmt wird,
**dass** die Richtung der Fahrachse des Kraftfahrzeugs in der Auswerteeinrichtung auf der Grundlage der Erfassung der Markierungseinrichtung gesondert für jedes Rad aus einer Bewegungsbahn des mindestens einen Karosseriemerkmals (7) ermittelt wird und
**dass** die Lage der Drehachse des Rades (5) bezüglich der Vertikalen und der Richtung der Fahrachse bestimmt wird.

2. Vorrichtung nach Anspruch 1,
**dadurch gekennzeichnet,**
**dass** die Drehachse des Rades während der Vorbeifahrt durch Erfassen der einzelnen Drehbahnen mehrerer Radmerkmale (8) erfolgt, wobei die Translationsbewegung des Kraftfahrzeuges, die aus der Bewegungsbahn des mindestens einen Karosseriemerkmals (7) bestimmt wird, eliminiert wird.

3. Vorrichtung nach Anspruch 1 oder 2,
**dadurch gekennzeichnet,**
**dass** zum Ermitteln der Vertikalenrichtung die Bezugsmerkmalsanordnung (3) in eine Ruhelage eingependelt aufgehängt ist.

4. Vorrichtung nach einem der vorhergehenden Ansprüche,
**dadurch gekennzeichnet,**
**dass** die Richtung der Fahrachse und/oder die Vertikalenrichtung auf ein karosserietypisches Koordinatensystem bezogen wird, wobei zur Parameter-Transformation mehrere Karosseriemerkmale (7) verwendet werden.

5. Vorrichtung nach Anspruch 5,
**dadurch gekennzeichnet,**
**dass** ein Prüfplatz zur Vermessung eines gelenkten Rades (5) vorgesehen ist, auf dem die Vermessung auf der Basis des karosserietypischen Koordinatensystems vorgenommen wird.

## Claims

1. Device for determining the wheel geometry and/or axial geometry of motor vehicles in a measurement space, having an optical measuring device having at least two image recording devices which senses, from at least two different perspectives, a marking device including a plurality of wheel features (8) which are arranged on a wheel (5), at least one bodywork feature (7) and one reference feature arrangement (3) with at least three reference features (4) which are offset at least in a plane, and having an evaluation device, the position of the reference features (4) in the measurement space being known in the evaluation device, the marking device being sensed as the motor vehicle passes by and the axis of rotation of a measured wheel (5) being determined by simultaneously sensing the wheel features (8) and the at least one bodywork feature (7) in the measurement space at a plurality of times, **characterized in that** the vertical direction in the measurement space is determined from the position of the reference features (4) in the measurement space, **in that** the direction of the movement axis of the motor vehicle in the evaluation device is determined separately for each wheel from a movement path of the at least one bodywork feature (7), on the basis of the sensing of the marking device, and **in that** the position of the axis of rotation of the wheel (5) is determined with respect to the vertical and the direction of the movement axis.

2. Device according to Claim 1, **characterized in that** the axis of rotation of the wheel is determined as it passes by by sensing the individual orbits of a plurality of wheel features (8), the translatory movement of the motor vehicle, which is determined from the movement path of the at least one bodywork feature (7), being eliminated.

3. Device according to Claim 1 or 2, **characterized in that**, in order to determine the vertical direction, the reference feature arrangement (3) is suspended having settled to a position of rest.

4. Device according to one of the preceding claims, **characterized in that** the direction of the movement axis and/or the vertical direction are referred to a coordinate system which is typical of bodywork, a plurality of bodywork features (7) being used for parameter transformation.

5. Device according to Claim 5, **characterized in that** a testing station is provided for measuring a steered wheel (5) on which the measurement is performed on the basis of the coordinate system which is typical of bodywork.

## Revendications

1. Dispositif pour déterminer la géométrie d'axe d'une roue et/ou d'un essieu de véhicules automobiles dans une chambre de mesure, comprenant une installation de mesure optique avec au moins deux installations de prise de vue, qui à partir d'au moins deux perspectives différentes détecte une installation de marquage y compris plusieurs repères de roue (8) disposés sur une roue (5), au moins un repère de carrosserie (7) et un ensemble de repères de référence (3) avec au moins trois repères de référence (4) décalés dans au moins un plan, et une installation d'exploitation qui connaît, l'emplacement des repères de référence (4) dans la chambre de mesure, la détection de l'installation de marquage se faisant pendant le passage du véhicule automobile, et l'axe de rotation d'une roue (5) à mesurer étant déterminé à plusieurs moments dans la chambre de mesure par la détection simultanée des repères de roue (8) et de l'au moins un repère de carrosserie (7),
**caractérisé en ce que**
la direction verticale dans la chambre de mesure est déterminée à partir de l'emplacement des repères de référence (4) dans la chambre de mesure,
la direction de l'essieu d'entraînement du véhicule automobile est déterminée dans l'installation d'exploitation sur la base de la détection de l'installation de marquage pour chacune des roues à partir du trajet de mouvement de l'au moins un repère de carrosserie (7), et
l'emplacement de l'axe de rotation de la roue (5) est déterminé par rapport à la verticale et à la direction de l'essieu d'entraînement.

2. Dispositif selon la revendication 1,
**caractérisé en ce que**
l'axe de rotation de la roue est déterminé pendant le passage par la détection des différents tours de rotation de plusieurs repères de roue (8), en éliminant le mouvement de translation du véhicule automobile déterminé à partir du trajet de mouvement de l'au moins un repère de carrosserie (7).

3. Dispositif selon la revendication 1 ou 2,
**caractérisé en ce que**
pour déterminer la direction verticale l'ensemble de repères de référence (3) est suspendu de manière stabilisée dans une position de repos.

4. Dispositif selon l'une quelconque des revendications précédentes,
**caractérisé en ce que**
la direction de l'essieu d'entraînement et/ou la direction verticale est ramenée à un système de coordonnées typique de la carrosserie, plusieurs repères de carrosserie (7) étant utilisés pour la transformation des paramètres.

5. Dispositif selon la revendication 5,
**caractérisé en ce que**
pour mesurer une roue directrice (5) un poste de contrôle effectue la mesure sur la base du système de coordonnées typique de la carrosserie.
